# EUROPEAN PATENT SPECIFICATION

(11) **EP 2 634 671 B1**
(45) Date of publication and mention of the grant of the patent: **15.08.2018**
(21) Application number: 13156830.5
(22) Date of filing: 26.02.2013
(51) Int. Cl.: G06F 3/01, B64D 11/00, G06F 3/042, G06F 3/0481, G06F 3/0482, G02B 27/01, G06F 3/0346

(54) **Device and method for exchanging information between at least one operator and a machine**
Vorrichtung und Verfahren zum Austausch von Informationen zwischen mindestens einem Bediener und einer Maschine
Dispositif et procédé pour échanger des informations entre au moins un opérateur et une machine

(30) Priority: 29.02.2012 DE 102012203163; 29.02.2012 US 201261604589 P
(43) Date of publication of application: 04.09.2013
(73) Proprietor: Airbus Operations GmbH, 21129 Hamburg (DE)
(72) Inventor: Riedel, Christian, 21640 Bliedersdorf (DE); Mahn, Stefan, 21614 Buxtehude (DE)
(74) Representative: Isarpatent

(56) References cited:
- EP-A2- 2 293 175
- US-A- 6 031 519
- US-A1- 2002 015 063
- US-A1- 2008 295 037
- US-A1- 2011 316 679
- US-A1- 2011 320 969

## Description

The present invention relates to a device for exchanging information between at least one operator and a machine.

Although applicable to any machines, the present invention is explained in greater detail, by way of example, in relation to exchanging information for controlling and monitoring at least one aircraft cabin system.

In the aircraft cabin, touchscreens have become popular for operating relatively complex systems such as a cabin management system, for example CIDS, or an inflight entertainment system. Touchscreens generally consist of an LCD screen in conjunction with a transparent, resistive or capacitive touch film. This combination makes it possible to display freely configurable menus and operating elements. One example of this is the flight attendant panel of which the operating interface is disclosed in DE 101 00 273 A1.

There are a number of limitations inherent to any two-dimensional operating interface as a result of the construction thereof.

This solution has limitations in so far as it is not always clear which elements on the screen are for display purposes and which ones can actually be operated or changed. This necessitates strict rules on the appearance of the individual elements, in the form of a "style guide".

Two-dimensional interfaces also require the user to have some degree of imagination, for example when continuing down lists using scroll bars. Further, the screen must not be overloaded with content. In spite of any increase in the scope of operation, the operator must retain an overview. Using a larger display surface also fails to solve this problem. It should be easy for the viewer to find important events and information.

Touchscreens have some unfavourable properties. Thus, the touch film rapidly becomes dirty as a result of contact with fingers, in particular by way of grease depositions. This is unhygienic and also reduces the brightness and legibility of the display, which are already made worse by the touch film itself. Depending on the construction, air pressure changes and static charge may also reduce the functionality of the touchscreen. Capacitive touchscreens are highly suited to recognising gestures, but often cannot be operated with gloves. Moreover, for reasons of robustness the film carrier is often made of glass, and this results in additional weight.

A recent trend in the field of display technology involves three-dimensional displays, which are provided as a glasses-based display having shutter glasses or polarising filter glasses, but also as a glasses-free autostereoscopic display. However, if input is to be made possible in this case in a manner analogous to a two-dimensional touchscreen, conventional touch films are no longer suitable for this type of display, since they can only detect inputs on the display surface. However, for the three-dimensional operating interface, the input has to be provided at precisely the location in the space in front of the display where the viewer perceives the operating element.

Camera systems are currently conventional for detecting gestures in three dimensions, but because of the small distance from the display surface, they are unsuitable when it is desired to integrate the sensor system into the same housing. Operation in a darkened cabin poses a further problem. In this case, cameras do not provide the necessary precision and reliability.

DE 10 2007 060 346 A1, for example, discloses a method for ultrasound travel time measurement, in particular for 2D or 3D localisation of objects.

US 2011/031 6679 A1 discloses an apparatus and method for proximity-based input. An electronic device is provided having a first function which is associated with a hovering input and a second function which is associated with a touch input to an input surface.

US 2011/0320969 A1 discloses an apparatus for processing an interactive three-dimensional object. The apparatus utilises a stereoscopic effect of the three-dimensional user interface. An input can be detected by means of a touch sensor or a proximity sensor.

US 6,031,519 A discloses a holographic direct manipulation interface. A holographic display unit displays a hologram and a motion detector detects motion in front of the displayed hologram. Based on the detected motion, a user command for computer can be generated.

US 2002/0015063 A1 discloses a touch sensitive input and display arrangement for controlling and monitoring aircraft cabin systems. Menus of the aircraft canine system can be displayed on a two-dimensional display and a user input is received by means of the touch sensitive LCD screen.

The object of the present invention is therefore to provide an improved device for exchanging information between at least one operator and a machine for controlling and monitoring an aircraft cabin system.

This object is achieved according to the invention by the features of the independent claims. One advantage of the invention is that a complete operating interface is provided, analogously to the two-dimensional touchscreen, which can detect gestures in the three-dimensional space in front of the display during operation.

Advantageous configurations and improvements of the device specified in claim 1 may be found in the dependent claims.

In the following, the invention is explained in greater detail by way of embodiments, with reference to the appended schematic drawings, in which:
Fig. 1 is a schematic diagram of the flow of information between an operator and a machine, in accordance with the device according to the invention for exchanging information between at least one operator and a machine;
Fig. 2 is an illustration of a three-dimensional arrangement of the system menus, illustrating the device for exchanging information between at least one operator and a machine in accordance with a first embodiment;
Fig. 3 is an illustration of a three-dimensional arrangement of the submenus of the system menu "Lights", illustrating the device for exchanging information between at least one operator and a machine in accordance with the first embodiment;
Fig. 4a) is a schematic side view of a sensor arrangement for detecting operator inputs, illustrating the device for exchanging information between at least one operator and a machine in accordance with the first embodiment;
Fig. 4b) is a schematic plan view of a sensor arrangement for detecting operator inputs, illustrating the device for exchanging information between at least one operator and a machine in accordance with the first embodiment;
Fig. 5 is a schematic drawing of the three-dimensional arrangement of the system menus and sensors for detecting operator inputs, illustrating the device for exchanging information between at least one operator and a machine in accordance with the first embodiment;
Fig. 6 is an illustration of a representation of the system menus using symbols, illustrating the device for exchanging information between at least one operator and a machine in accordance with a second embodiment;
Fig. 7a) is a schematic side view of a sensor arrangement for detecting operator inputs, illustrating the device for exchanging information between at least one operator and a machine in accordance with a third embodiment;
Fig. 7b) is a schematic plan view of a sensor arrangement for detecting operator inputs, illustrating the device for exchanging information between at least one operator and a machine in accordance with the third embodiment;
Fig. 8a) is a schematic side view of a sensor arrangement for detecting operator inputs, illustrating the device for exchanging information between at least one operator and a machine in accordance with a fourth embodiment;
Fig. 8b) is a schematic plan view of a sensor arrangement for detecting operator inputs, illustrating the device for exchanging information between at least one operator and a machine in accordance with the fourth embodiment;
Fig. 9 is a schematic block diagram of the sensor arrangement for detecting operator inputs, illustrating the device for exchanging information between at least one operator and a machine in accordance with the fourth embodiment;
Fig. 10a) is a schematic side view of a sensor arrangement for detecting operator inputs, illustrating the device for exchanging information between at least one operator and a machine in accordance with a fifth embodiment;
Fig. 10b) is a schematic plan view of a sensor arrangement for detecting operator inputs, illustrating the device for exchanging information between at least one operator and a machine in accordance with the fifth embodiment;
Fig. 11 is a schematic three-dimensional drawing of a sensor arrangement for detecting operator inputs, illustrating the device for exchanging information between at least one operator and a machine in accordance with a sixth embodiment; and
Fig. 12 is a schematic drawing of the three-dimensional arrangement of the system menus and the sensors for detecting operator inputs, illustrating the device for exchanging information between at least one operator and a machine in accordance with the sixth embodiment.

In the drawings, like reference signs denote like or functionally equivalent components unless stated otherwise.

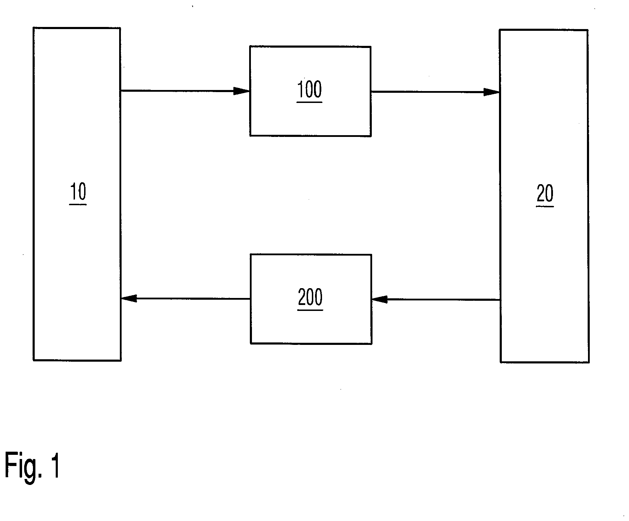

Fig. 1 is a schematic diagram of the flow of information between an operator and a machine, in accordance with the device according to the invention for exchanging information between at least one operator and a machine.

In Fig. 1, reference sign 10 denotes a machine and reference sign 20 denotes an operator. By way of the display means 100, information from the machine 10 is transmitted to the operator 20. The operator 20 conveys information to the machine 10 by way of the input means 200.

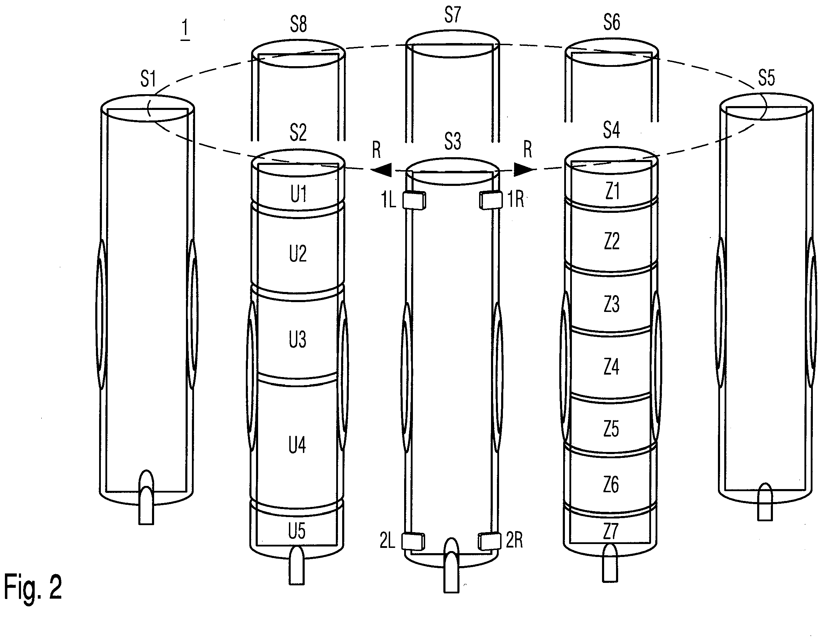

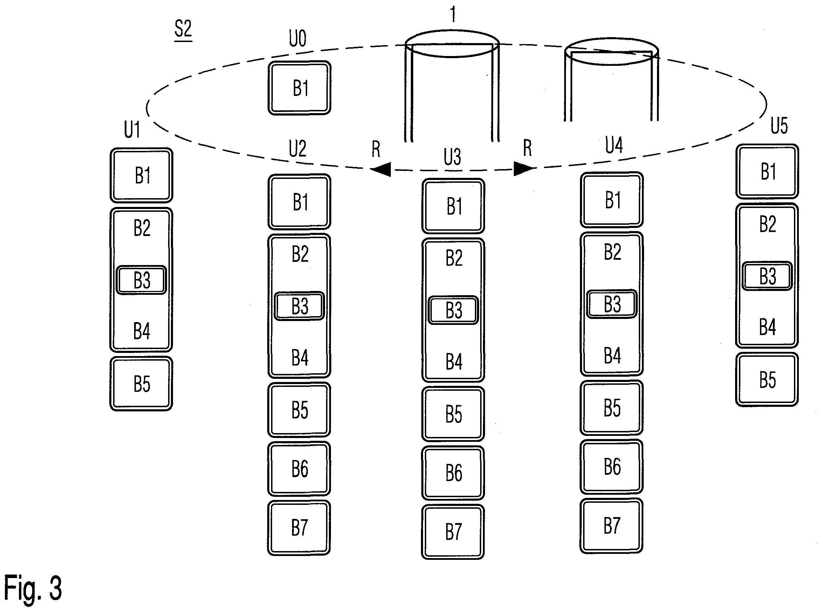

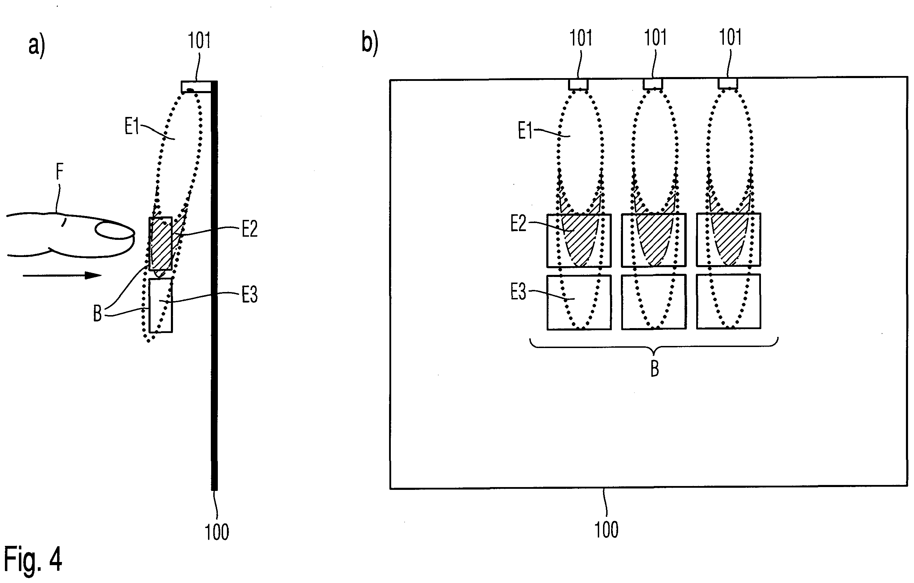

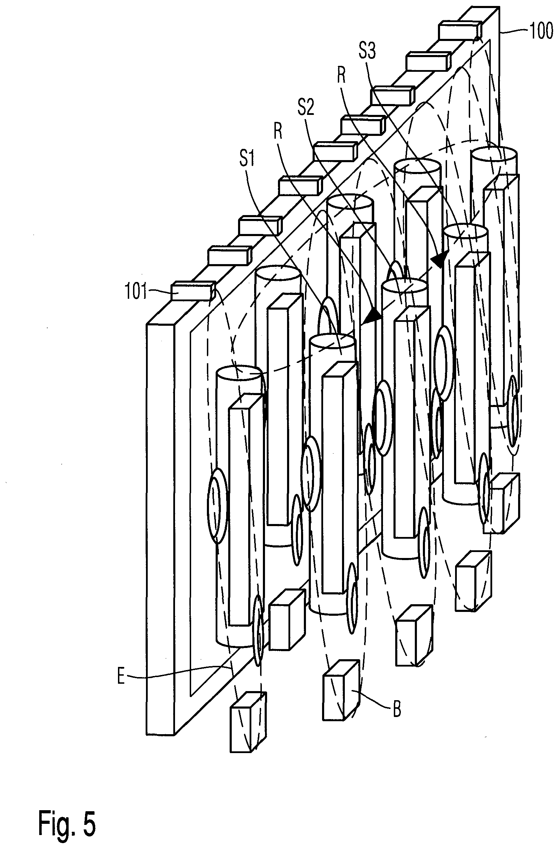

Fig. 2 is an illustration of a three-dimensional arrangement of the system menus, illustrating the device for exchanging information between at least one operator and a machine in accordance with a first embodiment, Fig. 3 is an illustration of a three-dimensional arrangement of the submenus of the system menu "Lights", illustrating the device for exchanging information between at least one operator and a machine in accordance with the first embodiment, Fig. 4a) and b) are schematic drawing of a sensor arrangement for detecting operator inputs, illustrating the device for exchanging information between at least one operator and a machine in accordance with the first embodiment, and Fig. 5 is a schematic drawing of the three-dimensional arrangement of the system menus and sensors for detecting operator inputs, illustrating the device for exchanging information between at least one operator and a machine in accordance with the first embodiment.

In Fig. 2, 3, 4 and 5, reference sign 1 denotes a basic layout of the "Main and Status" view, reference sign S1 denotes the system menu "Smoke Detection", reference sign S2 denotes the system menu "Lights", reference sign S3 denotes the system menu "Doors", reference sign S4 denotes the system menu "Temperature", reference sign S5 denotes the system menu "Water Waste", reference sign S6 denotes the system menu "Announcements", reference sign S7 denotes the system menu "Miscellaneous" and reference sign S8 denotes the system menu "Galley Cooling". 1L denotes the symbol "Door One Left", 2L denotes the symbol "Door Two Left", 1R denotes the symbol "Door One Right", and 2R denotes the symbol "Door Two Right" of the system menu S3. U0 denotes the submenu "General", U1 denotes the submenu "Entry 1", U2 denotes the submenu "First Class", U3 denotes the submenu "Business Class", U4 denotes the submenu "Economy Class", and U5 denotes the submenu "Entry 2" of the system menu S2. Z1 denotes the submenu "Zone 1", Z2 denotes the submenu "Zone 2", Z3 denotes the submenu "Zone 3", Z4 denotes the submenu "Zone 4", Z5 denotes the submenu "Zone 5", Z6 denotes the submenu "Zone 6", and Z7 denotes the submenu "Zone 7" of the system menu S4. The possible direction of rotation of the carousel-type arrangement is illustrated by way of arrows, which are denoted by the reference sign R. Reference sign B1 denotes an operating element "On", reference sign B2 denotes an operating element "Dim 3", reference sign B3 denotes an operating element "Dim 2", reference sign B4 denotes an operating element "Dim 1", reference sign B5 denotes an operating element "Off", reference sign B6 denotes an operating element "Scenario 1" and reference sign B7 denotes an operating element "Scenario 2" of the submenus U0-U5. Reference sign 100 denotes a display means, 101 denotes a sensor which has a detection region for range 1 denoted as E1, has a detection region for range 2 denoted as E2 and has a detection region for range 3 denoted as E3. Reference sign B denotes virtual operating elements, which can be actuated for example by way of a finger F. Reference sign E denotes a detection region of the sensor 101.

In accordance with the first embodiment of the device according to the invention, the display means 100 is an autostereoscopic glasses-free 3D display, at least one aircraft cabin system being controlled and monitored by way of the exchange of information.

Fig. 2 shows by way of example a basic layout 1 of the image generated by the display means 100.

Conventional menus are generally configured as lists of selectable items, which are orientated either horizontally or vertically. If there are more selectable items available than will fit on the screen surface, corresponding scrolling is carried out, generally indicated by way of a scroll bar or using arrow displays. Thus, the individual system menus S1-S8 are selected at the flight attendant panel by way of a sequence of this type of buttons displayed in a horizontal arrangement on the lower edge of the screen. The buttons which are not shown can be scrolled to by way of two arrow buttons on the left and right edges of the screen. Once the respective button representing the system menu has been actuated, the associated aircraft fuselage is displayed in a vertical position on the screen.

For the three-dimensional display approach in Fig. 2 in accordance with the basic layout 1, the individual system menus S1-S8 are now represented directly by the individual aircraft fuselages, which are in sequence in the manner of a string of pearls. This makes the arrow keys unnecessary, and all of the available system menus S1-S8 are always visible simultaneously as a result of the three-dimensional view. This removes the irritation of deciding which direction to scroll in and makes access faster. The direction of rotation may either be horizontal, as shown in Fig. 2, or vertical, depending on the screen format.

By way of the 3D effect, the system menus S2, S3, S4 located in the foreground additionally project out of the screen surface and are shown largest. This display provides the function of the conventional status page. The system menus S6, S7, S8 are thus made smaller and smaller towards the inside of the screen. All of the aircraft fuselages remain facing the screen surface. Thus, important events or alerts can be detected even when the respective system menu S6, S7, S8 is not actually in the foreground.

Particular system menus S1-S8 are selected by rotating the carousel by way of a finger gesture, for example a wiping movement. The respective active system menu is located in the foreground, and can be zoomed in on or made smaller again by way of gestures. The gesture for zooming in may for example consist of closing the hand while simultaneously pulling towards the operator 20. One possibility for zooming out is to push the respective system menu away with an open hand, for example. The gestures used for operation should correspond to natural, intuitive movements.

For a quick overview of the cabin status, it is desirable for particular system menus S1-S8 to be in the foreground permanently when the input means 200 is not being operated. In this context, the "carousel" may for example rotate back into a preferred orientation, similarly to a compass, if there has been no further input for a particular period of time. The view which is subsequently shown corresponds to the "Cabin Status Page".

Once a system menu S1-S8 has been selected as active, the associated aircraft fuselage is pulled into the foreground in an enlarged form and displayed in front of the plane of the screen. By way of example, Fig. 3 shows one possible transition from the basic layout 1 of the "Main and Status" view to the system menu "Lights" S2.

In addition, corresponding operating elements B, B1-B7, for example buttons and displays, can be placed in the same way as in the current flight attendant panel if display within the aircraft fuselage is insufficient or inappropriate. The operating elements B, B1-B7, for example buttons or switches, are made three-dimensional, unlike in the conventional flight attendant panel, and each project out of the plane of the screen. They are thus perceived by the operator 20 as actual buttons or switches which can be pressed. If a button is pressed by positioning a finger F on the virtual surface of the button and moving the finger F forwards, in accordance with Fig. 4a), the operator 20 receives a visual response from the button, in that the button also moves forwards along with the finger. In addition or alternatively, there may be an acoustic response in the form of a clicking sound.

Depending on the configuration, the button may also for example have a locking function, in which case it remains permanently in the depressed position. Unlike with the two-dimensional display, this makes possible a very clear, unmistakeable display of the respective state, which is intuitively detected and easily understood by the respective operator 20. Additional emphasis using color is possible but not compulsory.

Parameters such as temperature or sound volume for example can now likewise be controlled by way of a virtual slider control, the button of which is made three-dimensional and can be gripped and displaced in three dimensions using the fingers. Virtual toggle switches in three dimensions would also be possible, for example.

In the event of problems or malfunctions, the operator 20 should be able to evaluate the relevant situation immediately at a glance from the display means 100 and deal with it rapidly and without errors. This is a further major advantage of a three-dimensional man-machine interface. Nowadays, a problem is indicated at the flight attendant panel by way of a flashing button "CIDS caution light" at the upper edge of the screen. The operator 20 then has to select the relevant page manually so as to have the relevant information displayed. As with the disclosed compass principle or rotation principle, the carousel of system menu pages S1-S8 automatically rotates, for example in the event of a problem, into a position in which the affected system menu S1-S8 is in the foreground.

Additional awareness on the part of the operator 20 is now created for example in that at least one affected system menu S1-S8 "jumps out" towards the operator 20 from the surface of the display means 100, in a constantly repeating movement. It would also be conceivable to display a plurality of system menus S1-S8 side by side simultaneously, it also being possible for example to reorder the sequence if necessary. Alternatively, it is also possible for a particular part of the display of the fuselage or a particular display element U1-U5, Z1-Z5, 1L, 1R, 2L, 2R to move out of the plane of the display means 100; in this way a three-dimensional flashing light may appear at the affected location, for example in the case of "Smoke Detection".

Once the corresponding system menu S1-S8 has subsequently been selected, so as to press a particular operating element B, B1-7, for example a button, to eliminate the problem, said button may also immediately be indicated in that it moves towards the operator, in addition to the flash, and encourages him to press it, and the operator will subsequently do so in a reflex-like manner. This ensures that incorrect operations are reduced even in stressful situations, and the crew deals with the situation rapidly.

Fig. 4a) and b) show by way of example a schematic arrangement of sensors 101, which are provided as an input means 200 for detecting the gestures for operating the machine 10 and directly for operating the three-dimensional surface of the display means 100.

This input means 200 now has to provide the function of the touch film of a two-dimensional display in a comparable manner for the virtual space. An input for an operating element B, B1-B7 can therefore no longer take place on the surface of the display means 100, but instead has to take place in the three-dimensional space at the same location where the virtual operating elements B, B1-B7 appear to the operator 20.

Camera systems are currently conventional for detecting gestures in three dimensions, but because of the small distance from the display surface 100, they are unsuitable when it is desired to integrate the sensors 101 into the same housing. Operation in a darkened cabin poses a further problem. In this case, cameras do not provide the necessary precision and reliability.

It is therefore most suitable to detect the input by means of sensors 101 which can be arranged at the edge of the display means 100, for example in the form of a matrix. The sensors 101 can detect the distance of the operating finger or fingers F from the sensor 101 in three dimensions. By arranging the sensors 101 in a suitable manner, the input point in the virtual space can be determined by means of a controller.

Fig. 4a) and b) illustrate the principle behind a simplified method for detecting inputs on an operating interface having a small number of virtual operating elements B, B1-B7. The sensors 101 shown in this case may in principle measure the distance by various methods. The prior art in the field of distance measurement includes for example ultrasound sensors, which detect the distance linearly over time by way of the travel time of a reflected signal to the sensor 101.

However, other types of sensors would also be conceivable, which for example emit radio waves in the microwave range, or even light beams, instead of sound waves. In the case of a light source, a grid of fine laser beams or UV light would be conceivable, for example. In this case, either the reflected portion of the light would be evaluated on the same side of the display, or, in a simplified version, the incidence of the light on the opposite edge of the display would be evaluated by photocells, as in a light barrier. However, this last variant requires the installation described below in the fourth and fifth embodiment.

The placement of the sensors 101 may be configured for various distances, detection ranges E1, E2 or E3. The output signals of the sensors 101 are conveyed to the controller by way of discrete signals. In the disclosed application, the A/D converter is integrated into the sensor 101. By way of the differentiated overlapping detection ranges E1, E2, E3, it is possible to draw an inference as to the position of the finger F in three dimensions.

With the disclosed sensor system, the operating interface for a flight attendant panel can be configured to be three-dimensional. Fig. 5 shows an example of the three-dimensional implementation of the base layout 1 of the "Main and Status" view and the correspondingly selectable system menus S1-S8. In this case, to make the drawing clearer, only one series of sensors 101 is shown in an approximate grid pattern.

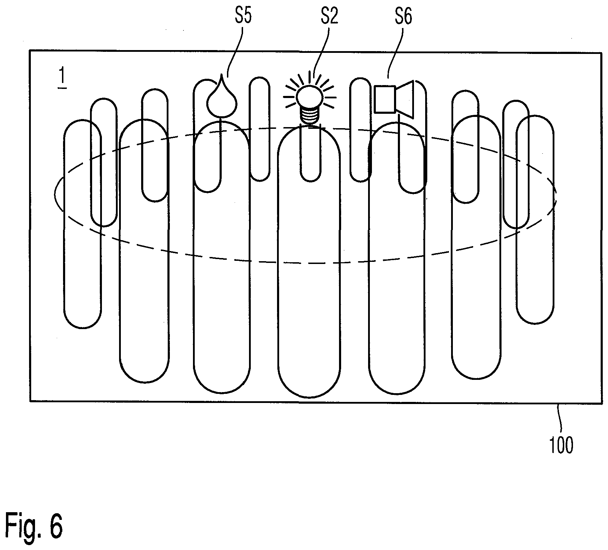

Fig. 6 is an illustration of a representation of the system menus using symbols, illustrating the device for exchanging information between at least one operator and a machine in accordance with a second embodiment.

In Fig. 6, reference sign 1 denotes a basic layout of the "Main and Status" view, reference sign 100 denotes a display means, reference sign S2 denotes the system menu "Lights", reference sign S5 denotes the system menu "Water Waste" and reference sign S6 denotes the system menu "Announcements".

In accordance with the second embodiment of the device according to the invention, which is otherwise analogous to the first embodiment, the system menus S1-S8 are signified by way of unambiguous symbols and/or photos and/or animations

As a result of the additional signification by way of unambiguous symbols, the system menus which are located in the background can rapidly be identified again. For example, a loudspeaker for the system menu "Announcements" S6, a light bulb for the system menu "Lights" S2, and a drop of water for the system menu "Water Waste" S5 would be conceivable. In each case, the symbols should be just as to-the-point as the "Fasten Seatbelt" or "No Smoking" signs for example. Representation by a photo or a 3D animation is also conceivable. Another further possible form of configuration is only to display the system menus which are furthest away using a symbol. In this case, the system menus which are displayed larger in the foreground are accordingly provided with titles instead of the symbols.

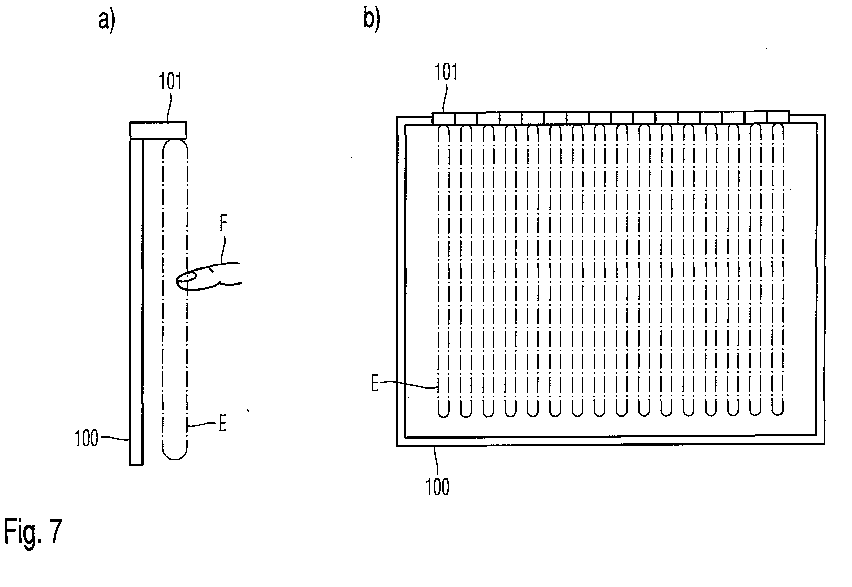

Fig. 7a) and b) are schematic drawings of a sensor arrangement for detecting operator inputs, illustrating the device for exchanging information between at least one operator and a machine in accordance with a third embodiment.

In Fig. 7a) and b), reference sign 100 denotes a display means and reference sign 101 denotes a sensor. Reference sign F denotes a finger. Reference sign E denotes a detection range of the sensor 101.

In accordance with the third embodiment of the device according to the invention, which is otherwise analogous to the first embodiment, there is a three-dimensional display on a relatively large display of the display means 100 having any desired image content, the maximum resolution of the sensors 101 ideally being equal to the pixel resolution of the display. For this purpose, the sensor detection range E has to be configured more tightly or with a narrower mesh. The narrow-mesh detection region E, and thus the lobe shape of the sensor, can be produced by strongly focussing the emitted ultrasound wave. It is also conceivable for this purpose to select a higher ultrasound frequency, which results in a smaller lobe. Since the distances between the lobes cannot be made arbitrarily smaller, and the fingers F of the operator 20 also have some width, the controller will often receive signals from a plurality of sensors 101 when a button is virtually pressed by the finger F. In this context, the sensor 101 which detects the shortest distance is always selected for the evaluation. This sensor will have determined the position the most precisely. So as to detect the operation in three dimensions, the sensor heads of the sensors 101 have to be arranged in front of the display of the display means 100. A possible distance of 1-2 cm between the transmission lobe and the display surface of the display means 100 has been determined experimentally.

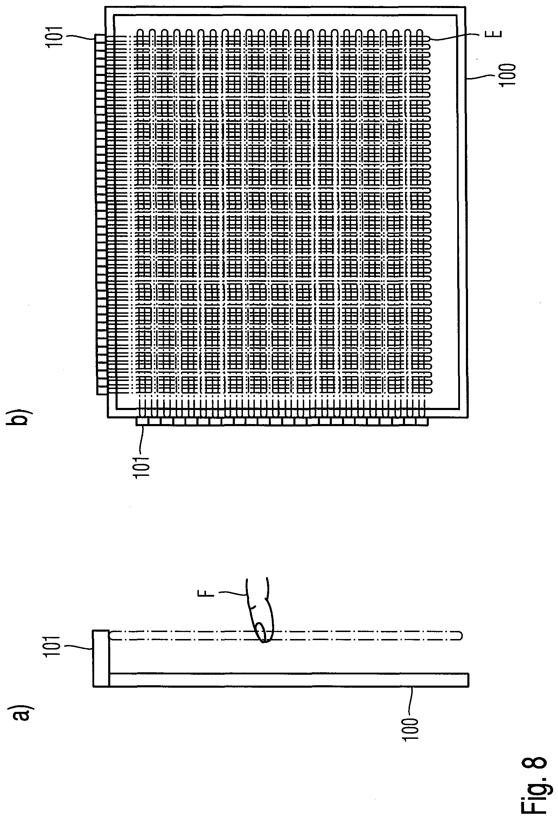

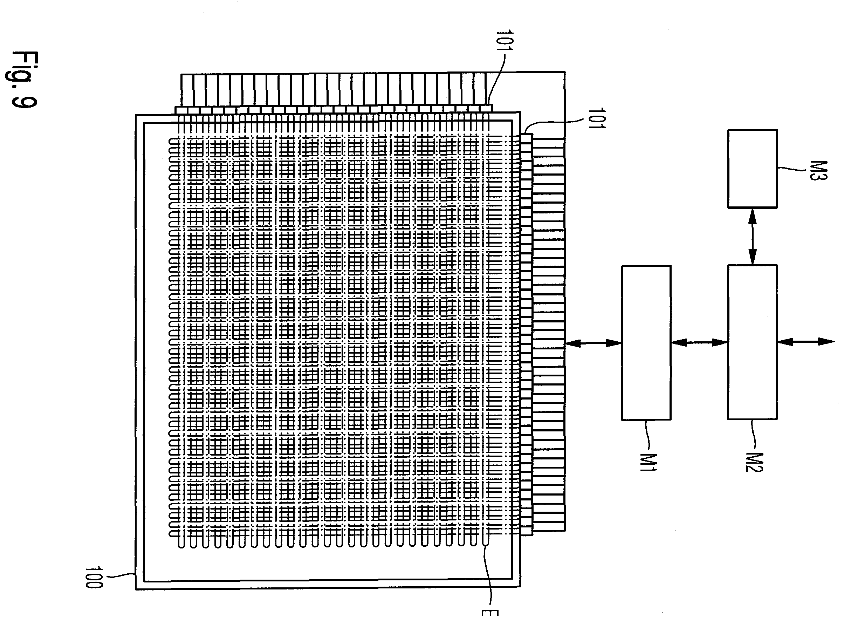

Fig. 8a) and b) are schematic drawings of a sensor arrangement for detecting operator inputs, illustrating the device for exchanging information between at least one operator and a machine in accordance with a fourth embodiment, and Fig. 9 is a schematic block diagram of the sensor arrangement for detecting operator inputs, illustrating the device for exchanging information between at least one operator and a machine in accordance with the fourth embodiment.

In Fig. 8a) and b) and Fig. 9, reference sign 100 denotes a display means, and reference sign 101 denotes a sensor. Reference sign F denotes a finger. Reference sign E denotes a detection region of the sensor 101. Reference sign M1 denotes a multiplexer/digital converter, M2 denotes a controller/FPGA, and M3 denotes a flash memory.

In accordance with the fourth embodiment of the device according to the invention, which is otherwise analogous to the first embodiment, the multi-touch principle is implemented by arranging the sensors 101 for the horizontal and vertical directions on the display edge of the display means 100 with narrow lobes of the detection region E, as is shown in Fig. 8.

For installation on the display edge, the sensors 101 should expediently be arranged on a circuit board. The arrangement on at least two adjacent sides of the display of the display means 100 results in a matrix in the horizontal and vertical directions. In this way, a three-dimensional multi-touch input can be provided.

If the sensors 101, for example piezo sensors, detect an operating action in the space in the form of one or more fingers F, at least one electronic evaluation system or controller M2 comprising a permanent memory (flash) M3 is required. The controller M2 determines the measurement values of the sensors 101 via a multiplexer and an analogue-digital converter (A/D converter) M1. Evaluating all of the sensor data over a relatively long period, in connection with the sensor arrangement of the fourth embodiment, makes it possible to detect gestures. Depending on the construction stage of the integration, the A/D converter may also be integrated into the sensors 101 in this context.

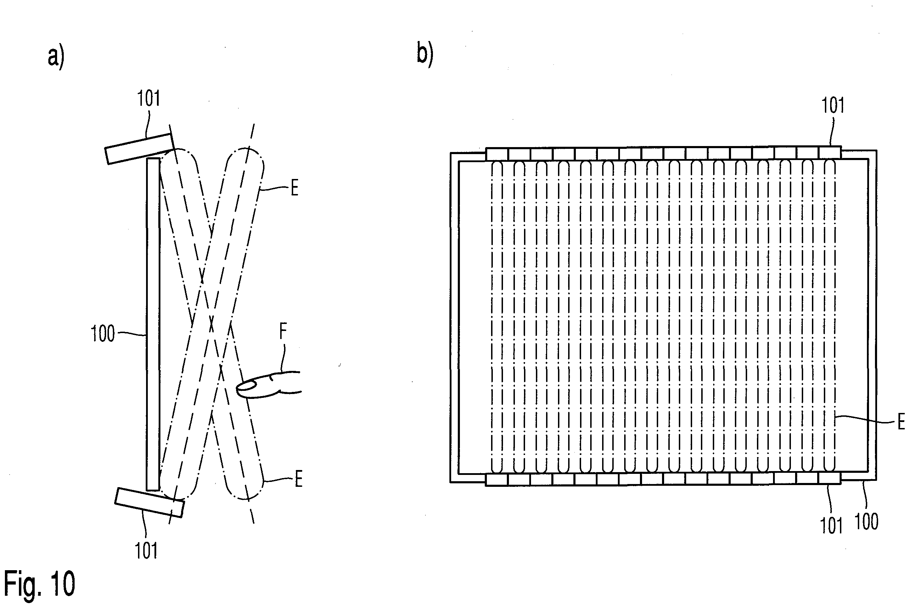

Fig. 10a) and b) are schematic drawings of a sensor arrangement for detecting operator inputs, illustrating the device for exchanging information between at least one operator and a machine in accordance with a fifth embodiment.

In Fig. 10a) and b), reference sign 100 denotes a display means, and reference sign 101 denotes a sensor. Reference sign F denotes a finger. Reference sign E denotes a detection region of the sensor 101.

In accordance with the fifth embodiment of the device according to the invention, which is otherwise analogous to the first embodiment, an arrangement of the sensors 101 in such way that the individual lobes are at a slight inclination away from the display surface is conceivable, so as to extend the detection region E further into the space in front of the display means 100. So as to achieve a homogeneous detection distance over the entire display surface of the display means 100, sensors 101 must also be positioned on the respectively opposite side of the display. The controller thus determines the position on the respective axis from the combination of the values from the two opposite rows of sensors.

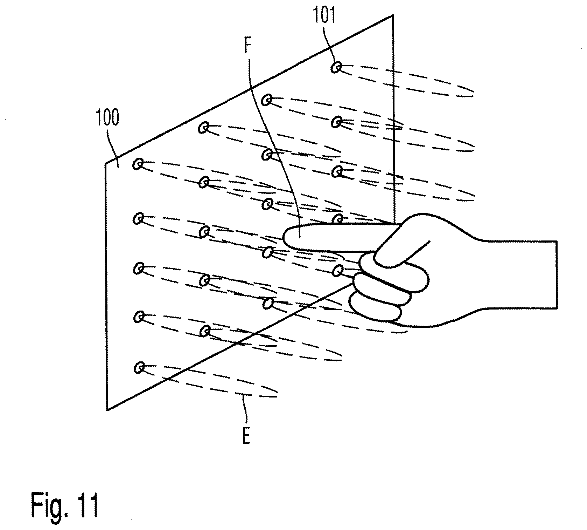

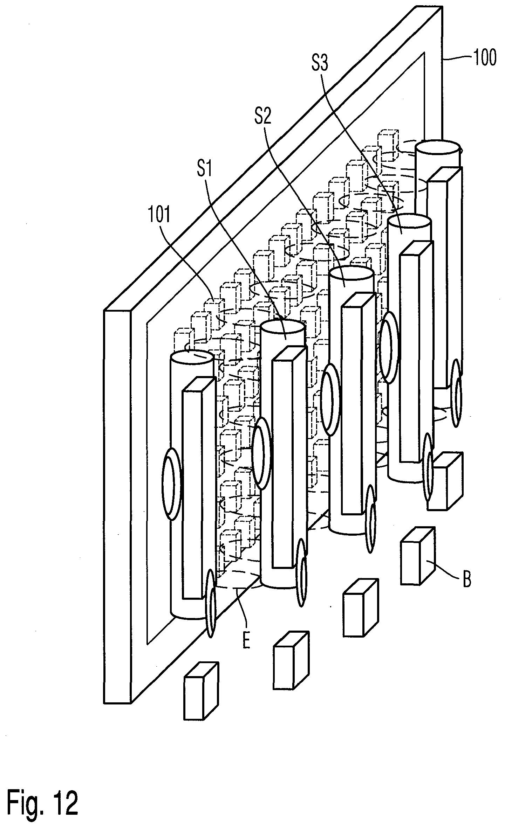

Fig. 11 is a schematic three-dimensional drawing of a sensor arrangement for detecting operator inputs, illustrating the device for exchanging information between at least one operator and a machine in accordance with a sixth embodiment; and Fig. 12 is a schematic drawing of the three-dimensional arrangement of the system menus and the sensors for detecting operator inputs, illustrating the device for exchanging information between at least one operator and a machine in accordance with the sixth embodiment.

In Fig. 11 and Fig. 12, reference sign 100 denotes a display means, and reference sign 101 denotes a sensor. Reference sign F denotes a finger. Reference sign E denotes a detection region of the sensor 101. Reference sign B denotes virtual operating elements, reference sign S1 denotes the system menu "Smoke Detection", reference sign S2 denotes the system menu "Lights", and reference sign S3 denotes the system menu "Doors".

In accordance with the sixth embodiment of the device according to the invention, which is otherwise analogous to the first embodiment, the sensors 101 are arranged in or behind the display means 100 in such a way that the lobes of the detection region E project out of the display means 100 and the distance measurement is carried out forwards. For this purpose, it would be conceivable, on the one hand, to select the sensors 10 and the material of the display means 100 in such a way that a measurement can still be carried out through the display means 100. On the other hand, by further miniaturising the sensors 101, they could also be inserted directly between the image points for example of an LCD panel or applied to the surface of the display means 100 as an additional layer.

Although the present invention has been disclosed by way of preferred embodiments, it is not limited thereto. In particular, the stated materials and topologies are purely exemplary, and are not limited to the described examples.

In particular, it is also conceivable to use the invention in other fields, in particular in vehicle or ship construction.

### List of reference signs

- 10: machine
- 100: display means
- 20: operator
- 200: input means
- 1: basic layout of the "Main and Status" view
- S1: system menu "Smoke Detection"
- S2: system menu "Lights"
- S3: system menu "Doors"
- S4: system menu "Temperature"
- S5: system menu "Water Waste"
- S6: system menu "Announcements"
- S7: system menu "Miscellaneous"
- S8: system menu "Galley Cooling"
- 1L: symbol "Door One Left"
- 1R: symbol "Door One Right"
- 2L: symbol "Door Two Left"
- 2R: symbol "Door Two Right"
- U0: submenu "General"
- U1: submenu "Entry 1"
- U2: submenu "First Class"
- U3: submenu "Business Class"
- U4: submenu "Economy Class"
- U5: submenu "Entry 2"
- Z1: submenu "Zone 1"
- Z2: submenu "Zone 2"
- Z3: submenu "Zone 3"
- Z4: submenu "Zone 4"
- Z5: submenu "Zone 5"
- Z6: submenu "Zone 6"
- Z7: submenu "Zone 7"
- R: arrows
- B1: operating element "On"
- B2: operating element "Dim 3"
- B3: operating element "Dim 2"
- B4: operating element "Dim 1"
- B5: operating element "Off"
- B6: operating element "Scenario 1"
- B7: operating element "Scenario 2"
- 101: sensor
- E1: detection region range 1
- E2: detection region range 2
- E3: detection region range 3
- B: virtual operating elements
- F: finger
- E: detection region
- M1: multiplexer/digital converter
- M2: controller/FGPA
- M3: flash memory

## Claims

1. A device for exchanging information between at least one operator (20) and a machine (10), the device comprising the following components:
a display means (100) adapted to display information from the machine (10) to the at least one operator (20) visually and three-dimensionally;
an input means (200) adapted to detect the position of objects, preferably the position of the fingers (F) of the at least one operator (20), in three-dimensional space in relation to the display means (100), in a time-resolved manner by optical, acoustic or electromagnetic measurement methods, and to detect at least one operator input from the detected progression over time in accordance with at least one predetermined criterion and to pass said operator input on to the machine (10), **characterized in that** the machine (10) comprises at least one aircraft cabin system, which is controlled and monitored by way of the exchange of information between the at least one operator (20) and the at least one aircraft cabin system;
wherein the display means (100) is adapted to produce an image having a basic layout (1) in which individual system menus (S1-S8), which are each associated with the at least one aircraft cabin system, are represented directly by individual aircraft fuselages with display elements (U1-U5; Z1-Z5; 1L; 1R; 2L; 2R) contained therein, the system menus being in sequence in the manner of a string of pearls and being visible simultaneously, a respectively active system menu (S1-S8) being selectable in the foreground by rotating the carousel-type arrangement;
wherein, in the event of at least one problem detected by the system or at least one malfunction, the display means (100) is adapted to place a predefined system menu (S1-S8) in the foreground so as to be active and to provide at least one predefined animation of the predefined system menu (S1-S8) or the display elements (U1-U5; Z1-Z5; 1L; 1R; 2L; 2R); and
when the predefined system menu has been selected by the at least one operator, the display means (100) is adapted to immediately indicate a particular operating element by moving the operating element towards the operator so as to press the particular operating element.

2. The device according to claim 1, wherein the display means (100) is an autostereoscopic glasses-free 3D display.

3. The device according to claim 1 or 2, wherein the system menus (S1-S8) are signified by symbols, photos or animations.

4. The device according to claim 1 or 2, wherein a predefined system menu (S1-S8) is adapted to be placed in the foreground so as to be active if the input means (200) is not in operation according to at least one predetermined criterion.

5. The device according to any of claims 1 to 4, wherein the display means is adapted to display virtual operating elements (B; B1-7) in three dimensions preferably configured three-dimensionally as buttons, switches, toggle switches and slide controllers, and the display means is further adapted to display actuation or locking of the virtual operating elements (B; B1-B7), and to signal the possibility of actuation by the at least one operator (20) by way of at least one animation of the corresponding virtual operating element (B; B1-B7) in accordance with at least one predefined criterion.

6. The device according to claim 1, wherein the input means is adapted to detect the position of objects in three dimensions in a time-resolved manner using at least one ultrasound sensor (101).

7. The device according to claim 6, wherein the at least one ultrasound sensor (101) is arranged behind or in the display means (100) or vertically or horizontally laterally along the edges of the display means (100).

8. The device according to claim 1, wherein the input means (200) is adapted to determine at least one operator input from hand and finger movements of the at least one operator (20) in accordance with at least one predetermined criterion.

9. The device according to claim 8, wherein the display of the basic layout (1), the system menus (S1-S8) and the submenus (U0-U5) are adapted to be controlled by way of hand and finger movements, and the virtual operating elements (B; B1-B7) are adapted to be actuated by way of hand and finger movements.

10. The device according to claim 1, wherein the input means is adapted to detect the position of objects in three dimensions in a time-resolved manner using a microwave sensor (101) or at least one light beam sensor (101).

11. The device according to claim 10, wherein the at least one microwave sensor (101) or the at least one light beam sensor (10) is arranged behind or in the display means (100) or vertically or horizontally laterally along the edges of the display means (100).

12. A method for exchanging information between at least one operator (20) and a machine (10), the method comprising the following method steps:
displaying information from the machine (10) to the at least one operator (20) by means of a display means (100), the displaying being visual and three-dimensional;
detecting the position of objects, preferably the position of the fingers (F) of the at least one operator (20), by means of an input means (200) by optical, acoustic or electromagnetic measurement methods, in three-dimensional space with respect to the display means (100), the detection being time-resolved;
detecting at least one operator input from the detected progression over time of the position of objects in accordance with at least one predetermined criterion; and
passing the at least one detected operator input on to the machine (10),
**characterized in that** the machine (10) comprises at least one aircraft cabin system, which is controlled and monitored by way of the exchange of information between the at least one operator (20) and the at least one aircraft cabin system;
wherein an image produced by the display means (100) has a basic layout (1) in which individual system menus (S1-S8), which are each associated with the at least one aircraft cabin system, are represented directly by individual aircraft fuselages with display elements (U1-U5; Z1-Z5; 1L; 1R; 2L; 2R) contained therein, the system menus are in sequence in the manner of a string of pearls and are visible simultaneously, a respectively active system menu (S1-S8) being selectable in the foreground by rotating the carousel-type arrangement;
wherein, in the event of at least one problem detected by the system or at least one malfunction, placing a predefined system menu (S1-S8) in the foreground so as to be active and providing at least one predefined animation of the predefined system menu (S1-S8) or the display elements (U1-U5; Z1-Z5; 1L; 1R; 2L; 2R); and when the predefined system menu has been selected by the at least one operator, immediately indicating a particular operating element by moving the operating element towards the operator so as to press the particular operating element.

## Patentansprüche

1. Vorrichtung zum Austauschen von Informationen zwischen mindestens einem Bediener (20) und einer Maschine (10), wobei die Vorrichtung die folgenden Komponenten umfasst:
ein Anzeigemittel (100), das dafür ausgelegt ist, dem mindestens einen Bediener (20) Informationen von der Maschine (10) visuell und dreidimensional anzuzeigen;
eine Eingabemittel (200), das dafür ausgelegt ist, die Position von Objekten, bevorzugt die Position der Finger (F) des mindestens einen Bedieners (20), im dreidimensionalen Raum in Bezug auf das Anzeigemittel (100) in einer zeitaufgelösten Weise durch optische, akustische oder elektromagnetische Messmethoden zu detektieren und mindestens eine Bedienereingabe anhand der detektierten Progression im zeitlichen Verlauf gemäß mindestens einem zuvor festgelegten Kriterium zu detektieren und die Bedienereingabe an die Maschine (10) zu übermitteln,
**dadurch gekennzeichnet, dass** die Maschine (10) mindestens ein Flugzeugkabinensystem umfasst, das mittels des Austauschs von Informationen zwischen dem mindestens einen Bediener (20) und dem mindestens einen Flugzeugkabinensystem gesteuert und überwacht wird;
wobei das Anzeigemittel (100) dafür ausgelegt ist, ein Bild zu erzeugen, das eine Basisanordnung (1) aufweist, in der individuelle Systemmenüs (S1-S8), die jeweils mit dem mindestens einen Flugzeugkabinensystem verknüpft sind, direkt durch individuelle Flugzeugrümpfe mit darin enthaltenen Anzeigeelementen (U1-U5; Z1-Z5; 1L; 1R; 2L; 2R) dargestellt werden, wobei die Systemmenüs nacheinander in Form einer Perlenkette aufgereiht sind und gleichzeitig sichtbar sind, wobei ein jeweiliges aktives Systemmenü (S1-S8) im Vordergrund durch Rotieren der Karussellanordnung ausgewählt werden kann;
wobei für den Fall mindestens eines durch das System detektierten Problems oder mindestens einer Fehlfunktion das Anzeigemittel (100) dafür ausgelegt ist, ein zuvor festgelegtes Systemmenü (S1-S8) so im Vordergrund anzuordnen, dass es aktiv ist und mindestens eine zuvor festgelegte Animation des zuvor festgelegten Systemmenüs (S1-S8) oder der Anzeigeelemente (U1-U5; Z1-Z5; 1L; 1R; 2L; 2R) bereitstellt; und
wenn das zuvor festgelegte Systemmenü durch den mindestens einen Bediener ausgewählt wurde, das Anzeigemittel (100) dafür ausgelegt ist, sofort ein bestimmtes Bedienelement zu bezeichnen, indem das Bedienelement so zu dem Bediener bewegt wird, dass das bestimmte Bedienelement gedrückt wird.

2. Vorrichtung nach Anspruch 1, wobei das Anzeigemittel (100) eine autostereoskopische brillenlose 3D-Anzeige ist.

3. Vorrichtung nach Anspruch 1 oder 2, wobei die Systemmenüs (S1-S8) durch Symbole, Fotos oder Animationen dargestellt werden.

4. Vorrichtung nach Anspruch 1 oder 2, wobei ein zuvor festgelegtes Systemmenü (S1-S8) dafür ausgelegt ist, so im Vordergrund angeordnet zu werden, dass es aktiv ist, wenn das Eingabemittel (200) gemäß mindestens einem zuvor festgelegten Kriterium nicht in Betrieb ist.

5. Vorrichtung nach einem der Ansprüche 1 bis 4, wobei das Anzeigemittel dafür ausgelegt ist, virtuelle Bedienelemente (B; B1-7) in drei Dimensionen anzuzeigen, die bevorzugt dreidimensional als Knöpfe, Schalter, Kippschalter und Schieberegler ausgestaltet sind, und das Anzeigemittel des Weiteren dafür ausgelegt ist, eine Betätigung oder Verriegelung der virtuellen Bedienelemente (B; B1-7) anzuzeigen und die Möglichkeit einer Betätigung durch den mindestens einen Bediener (20) mittels mindestens einer Animation des entsprechenden virtuellen Bedienelements (B; B1-B7) gemäß mindestens einem zuvor festgelegten Kriterium zu signalisieren.

6. Vorrichtung nach Anspruch 1, wobei das Eingabemittel dafür ausgelegt ist, die Position von Objekten in drei Dimensionen in einer zeitaufgelösten Weise mittels mindestens eines Ultraschallsensors (101) zu detektieren.

7. Vorrichtung nach Anspruch 6, wobei der mindestens eine Ultraschallsensor (101) hinter oder in dem Anzeigemittel (100) oder vertikal oder horizontal seitlich entlang der Ränder des Anzeigemittels (100) angeordnet ist.

8. Vorrichtung nach Anspruch 1, wobei das Eingabemittel (200) dafür ausgelegt ist, mindestens eine Bedienereingabe anhand von Hand- und Fingerbewegungen des mindestens einen Bedieners (20) gemäß mindestens einem zuvor festgelegten Kriterium zu bestimmen.

9. Vorrichtung nach Anspruch 8, wobei die Anzeige der Basisanordnung (1), die Systemmenüs (S1-S8) und die Untermenüs (U0-U5) dafür ausgelegt sind, anhand von Hand- und Fingerbewegungen gesteuert zu werden, und die virtuellen Bedienelemente (B; B1-87) dafür ausgelegt sind, anhand von Hand- und Fingerbewegungen betätigt zu werden.

10. Vorrichtung nach Anspruch 1, wobei das Eingabemittel dafür ausgelegt ist, die Position von Objekten in drei Dimensionen in einer zeitaufgelösten Weise mittels eines Mikrowellensensors (101) oder mindestens eines Lichtstrahlsensors (101) zu detektieren.

11. Vorrichtung nach Anspruch 10, wobei der mindestens eine Mikrowellensensor (101) oder der mindestens eine Lichtstrahlsensor (10) hinter oder in dem Anzeigemittel (100) oder vertikal oder horizontal seitlich entlang der Ränder des Anzeigemittels (100) angeordnet ist.

12. Verfahren zum Austauschen von Informationen zwischen mindestens einem Bediener (20) und einer Maschine (10), wobei das Verfahren die folgenden Verfahrensschritte umfasst:
Anzeigen, dem mindestens einen Bediener (20), von Informationen aus der Maschine (10) mittels eines Anzeigemittels (100), wobei das Anzeigen visuell und dreidimensional erfolgt;
Detektieren der Position von Objekten, bevorzugt der Position der Finger (F) des mindestens einen Bedieners (20), mittels eines Eingabemittels (200) durch optische, akustische oder elektromagnetische Messmethoden im dreidimensionalen Raum mit Bezug auf das Anzeigemittel (100), wobei die Detektion zeitaufgelöst ist;
Detektieren mindestens einer Bedienereingabe anhand der detektierten Progression im zeitlichen Verlauf der Position von Objekten gemäß mindestens einem zuvor festgelegten Kriterium; und
Übermitteln der mindestens einen detektierten Bedienereingabe an die Maschine (10),
**dadurch gekennzeichnet, dass**
die Maschine (10) mindestens ein Flugzeugkabinensystem umfasst, das mittels des Austauschs von Informationen zwischen dem mindestens einen Bediener (20) und dem mindestens einen Flugzeugkabinensystem gesteuert und überwacht wird;
wobei ein durch das Anzeigemittel (100) erzeugtes Bild eine Basisanordnung (1) aufweist, in der individuelle Systemmenüs (S1-S8), die jeweils mit dem mindestens einen Flugzeugkabinensystem verknüpft sind, direkt durch individuelle Flugzeugrümpfe mit darin enthaltenen Anzeigeelementen (U1-U5; Z1-Z5; 1L; 1R; 2L; 2R) dargestellt werden, wobei die Systemmenüs nacheinander in Form einer Perlenkette aufgereiht sind und gleichzeitig sichtbar sind, wobei ein jeweiliges aktives Systemmenü (S1-S8) im Vordergrund durch Rotieren der Karussellanordnung ausgewählt werden kann;
wobei für den Fall mindestens eines durch das System detektierten Problems oder mindestens einer Fehlfunktion ein zuvor festgelegtes Systemmenü (S1-S8) so im Vordergrund angeordnet wird, dass es aktiv ist, und mindestens eine zuvor festgelegte Animation des zuvor festgelegten Systemmenüs (S1-S8) oder der Anzeigeelemente (U1-U5; Z1-Z5; 1L; 1R; 2L; 2R) bereitgestellt wird; und
wenn das zuvor festgelegte Systemmenü durch den mindestens einen Bediener ausgewählt wurde, sofort ein bestimmtes Bedienelement bezeichnet wird, indem das Bedienelement so zu dem Bediener bewegt wird, dass das bestimmte Bedienelement gedrückt wird.

## Revendications

1. Dispositif d'échange d'informations entre au moins un opérateur (20) et une machine (10), le dispositif comprenant les composants suivants :
un moyen d'affichage (100) conçu pour afficher des informations à partir de la machine (10) au niveau dudit au moins un opérateur (20) visuellement et tridimensionnellement ;
un moyen d'entrée (200) conçu pour détecter la position d'objets, de préférence la position des doigts (F) dudit au moins un opérateur (20), dans un espace tridimensionnel par rapport au moyen d'affichage (100), d'une manière résolue dans le temps par des procédés de mesure optiques, acoustiques ou électromagnétiques, et pour détecter au moins une entrée d'opérateur à partir de la progression détectée dans le temps selon au moins un critère prédéterminé, et pour transmettre ladite entrée d'opérateur à la machine (10),
**caractérisé en ce que**
la machine (10) comprend au moins un système de cabine d'aéronef, qui est commandé et surveillé au moyen de l'échange d'informations entre ledit au moins un opérateur (20) et ledit au moins un système de cabine d'aéronef ;
dans lequel le moyen d'affichage (100) est conçu pour produire une image ayant une disposition de base (1) dans laquelle des menus système individuels (S1-S8), qui sont associés chacun audit au moins un système de cabine d'aéronef, sont représentés directement par des fuselages d'aéronefs individuels avec des éléments d'affichage (U1-U5 ; Z1-Z5 ; 1L ; 1R ; 2L ; 2R) contenus dans ceux-ci, les menus système étant séquencés à la manière d'une chaîne de perles et étant visibles simultanément, un menu système respectivement actif (S1-S8) étant sélectionnable au premier plan en faisant tourner l'agencement de type carrousel ;
dans lequel, dans le cas d'au moins un problème détecté par le système ou d'au moins un dysfonctionnement, le moyen d'affichage (100) est conçu pour placer un menu système prédéfini (S1-S8) au premier plan de manière à être actif et à fournir au moins une animation prédéfinie du menu système prédéfini (S1-S8) ou des éléments d'affichage (U1-U5 ; Z1-Z5 ; 1L ; 1R ; 2L ; 2R) ; et
lorsque le menu système prédéfini a été sélectionné par ledit au moins un opérateur, le moyen d'affichage (100) est conçu pour indiquer immédiatement un élément de commande particulier en déplaçant l'élément de commande vers l'opérateur de manière à appuyer sur l'élément de commande particulier.

2. Dispositif selon la revendication 1, dans lequel le moyen d'affichage (100) est un affichage 3D autostéréoscopique sans lunettes.

3. Dispositif selon la revendication 1 ou 2, dans lequel les menus système (S1-S8) sont signifiés par des symboles, des photos ou des animations.

4. Dispositif selon la revendication 1 ou 2, dans lequel un menu système prédéfini (S1-S8) est conçu pour être placé au premier plan de manière à être actif si le moyen d'entrée (200) ne fonctionne pas selon au moins un critère prédéterminé .

5. Dispositif selon l'une quelconque des revendications 1 à 4, dans lequel le moyen d'affichage est conçu pour afficher des éléments de commande virtuels (B ; B1-7) en trois dimensions, de préférence configurés en trois dimensions sous la forme de boutons, de commutateurs, d'interrupteurs à bascule et de contrôleurs coulissants, et le moyen d'affichage est en outre conçu pour afficher l'actionnement ou le verrouillage des éléments de commande virtuels (B ; B1-B7), et pour signaler la possibilité d'actionnement par ledit au moins un opérateur (20) au moyen d'au moins une animation de l'élément de commande virtuel (B ; B1-E37) selon au moins un critère prédéfini.

6. Dispositif selon la revendication 1, dans lequel le moyen d'entrée est conçu pour détecter la position d'objets en trois dimensions d'une manière résolue dans le temps en utilisant au moins un capteur à ultrasons (101).

7. Dispositif selon la revendication 6, dans lequel ledit au moins un capteur à ultrasons (101) est agencé derrière ou dans le moyen d'affichage (100) ou verticalement ou horizontalement latéralement le long des bords du moyen d'affichage (100).

8. Dispositif selon la revendication 1, dans lequel le moyen d'entrée (200) est conçu pour déterminer au moins une entrée d'opérateur à partir de mouvements de la main et des doigts dudit au moins un opérateur (20) selon ledit au moins un critère prédéterminé.

9. Dispositif selon la revendication 8, dans lequel l'affichage de la disposition de base (1), les menus du système (S1-S8) et les sous-menus (U0-U5) sont commandés par des mouvements de la main et des doigts, et les éléments de commande virtuels (B ; B1-87) sont conçus pour être actionnés par des mouvements de la main et des doigts.

10. Dispositif selon la revendication 1, dans lequel le moyen d'entrée est conçu pour détecter la position d'objets en trois dimensions d'une manière résolue dans le temps en utilisant un capteur hyperfréquence (101) ou au moins un capteur de faisceau lumineux (101).

11. Dispositif selon la revendication 10, dans lequel ledit au moins un capteur hyperfréquence (101) ou ledit au moins un capteur de faisceau lumineux (10) est agencé derrière ou dans le moyen d'affichage (100) ou verticalement ou horizontalement le long des bords du moyen d'affichage. (100).

12. Procédé d'échange d'informations entre au moins un opérateur (20) et une machine (10), le procédé comprenant les étapes de procédé suivantes :
afficher des informations à partir de la machine (10) au niveau dudit moins un opérateur (20) au moyen d'un moyen d'affichage (100), l'affichage étant visuel et tridimensionnel ;
détecter la position d'objets, de préférence la position des doigts (F) dudit au moins un opérateur (20), au moyen d'un moyen d'entrée (200) par des procédés de mesure optiques, acoustiques ou électromagnétiques, dans un espace tridimensionnel par rapport au moyen d'affichage (100), la détection étant résolue dans le temps ;
détecter au moins une entrée d'opérateur à partir de la progression détectée dans le temps de la position d'objets selon au moins un critère prédéterminé ; et
transmettre ladite au moins une entrée d'opérateur détectée à la machine (10),
**caractérisé en ce que**
la machine (10) comprend au moins un système de cabine d'aéronef, qui est commandé et surveillé au moyen de l'échange d'informations entre ledit au moins un opérateur (20) et ledit au moins un système de cabine d'aéronef ;
dans lequel une image produite par le moyen d'affichage (100) présente une disposition de base (1) dans laquelle des menus système individuels (S1-S8), qui sont associés chacun audit au moins un système de cabine d'aéronef, sont directement représentés par des fuselages d'aéronefs individuels avec des éléments d'affichage (U1-U5 ; Z1-Z5 ; 1L ; 1R ; 2L ; 2R) contenus dans ceux-ci, les menus système sont séquencés à la manière d'une chaîne de perles et sont visibles simultanément, un menu système respectivement actif (S1-S8) étant sélectionnable au premier plan en faisant tourner l'agencement de type carrousel ;
dans lequel, dans le cas d'au moins un problème détecté par le système ou d'au moins un dysfonctionnement, placer au premier plan un menu système prédéfini (S1-S8) de manière à être actif, et fournir au moins une animation prédéfinie du menu système prédéfini (S1-S8) ou des éléments d'affichage (U1-U5 ; Z1-Z5 ; 1L ; 1R ; 2L ; 2R) ; et
lorsque le menu système prédéfini a été sélectionné par au moins un opérateur, indiquer immédiatement un élément de commande particulier en déplaçant l'élément de commande vers l'opérateur de manière à appuyer sur l'élément de commande particulier.
